Europäisches Patentamt

European Patent Office

Office européen des brevets

(19)

(11) EP 1 071 241 A1

(12) **EUROPEAN PATENT APPLICATION**

(43) Date of publication:
24.01.2001 Bulletin 2001/04

(51) Int Cl.⁷: H04L 7/033

(21) Application number: 99600020.4

(22) Date of filing: 18.10.1999

(84) Designated Contracting States:
AT BE CH CY DE DK ES FI FR GB GR IE IT LI LU
MC NL PT SE
Designated Extension States:
AL LT LV MK RO SI

(30) Priority: 23.07.1999 GR 99100252

(71) Applicant: Intrakom A.E.
Elliniki Biomihania Tilepikinonion & Sistimaton
Pliroforikis
190 02 Peanina, Attiki (GR)

(72) Inventors:
• Frantzeskakis, Manolis
  Athens (GR)
• Aretos, Konstantinos,
  Athens (GR)

(54) **Clock acquisition and tracking for burst communications**

(57) The present invention concerns a system for clock recovery on a burst-like waveform. The system is essentially characterised by successive steps of detecting the zero crossings of the input waveform, filtering out the zero crossings associated with smooth transitions of the input waveform, processing the remaining steep zero crossings to extract their phase with respect to a free running reference clock and computing the average of these phase observations to obtain the phase of the desired recovered clock. Comprising a memory storage with dynamically varying depth for maintaining phase values this non-decision directed clock recovery system handles in a unified and very efficient manner the problems of fast clock acquisition and reliable tracking. Modulation formats employing dense symbol constellation mappings such as QAM can be accommodated. The invention more particularly applies to wireline and wireless communication systems in point-to-multipoint and multipoint-to-multipoint configurations, or systems transmitting data over fast fading and time varying channels.

FIG. 2

EP 1 071 241 A1

**Description**

## BACKGROUND OF THE INVENTION

This invention relates to the clock recovery process in burst data transmission systems such as the time division multiple access (TDMA) communication systems, where fast clock acquisition and reliable clock tracking is required and especially to systems transmitting modulated data employing a dense symbol constellation mapping such as quadrature amplitude modulation (QAM) over communication links operating at low signal-to-noise ratio.

A clock or timing recovery process is necessary in a modulated data reception system for specifying the sampling points of the received waveform before the decision making process. There are two categories of clock recovery schemes. First, the non-decision directed ones, that offer short acquisition time and good performance in noisy environments but usually they can operate with relatively simple symbol constellation mappings. Second, the decision directed ones, that exhibit low jitter and can operate with any constellation mapping but they require sophisticated, time consuming acquisition and they do not behave well in noisy channels. As long as burst transmission systems are concerned, the transmission of the modulated waveform consists of burst-like segments separated by guard time intervals where no power is emitted. Reproducing the transmitted data at the receiver side requires the recovery of the timing information for each data burst, as well as recovery of a power detect signal demonstrating the boundaries of the received data bursts. Recovery of these parameters, as well as the carrier information, necessitates the use of some preamble data. Short acquisition time in clock recovery is crucial for minimising the preamble overhead and consequently maximising the system bandwidth. Furthermore, the need for best channel utilization dictates the use of modulation formats with dense symbol constellation mappings such as the QAM, operating at low signal-to-noise ratio, instead of using simpler modulation formats operating with a better performance margin in the same channels. This approach implies the need of a reliable non-decision directed clock recovery scheme appropriate for modulations employing dense symbol constellation mappings for use in both continuous and burst transmission systems.

The use of zero crossings of a received waveform for recovering the waveform timing content has been widespread. In U.S.Pat. No 3,878,473 issued to Ralph W.F. in 1975, a digitally implemented clock recovery scheme based on zero crossings is described. The input waveform is sampled at twice the symbol rate and the samples close to the zero crossing points are detected. The amplitude values of these samples represent the phase errors fed to a running average circuit. This circuit is used by a process producing the corrected clock signal that triggers the input sampling device. In the paper F.M. Gardner, 1986 (F.M. Gardner, "A BPSK/QPSK Timing Error Detector for Sampled Receivers", IEEE Transactions in Communications, Vol. COM-34, No 5, pp.423-429, May 1986) a simpler, yet very efficient phase error estimator is introduced. This estimator evaluates a phase error function using again the input signal amplitude at the expected zero crossing points. The error value is then used to correct the clock phase of the sampling device generating two samples per symbol. The resulting clock recovery algorithm is stable for both clock acquisition and tracking operation modes. An extension of this method for use in QAM signals is proposed in the paper N.A. D' Andrea et al., 1993 (N.A. D' Andrea and M. Luise, "Design and Analysis of a Jitter-Free Clock Recovery Scheme for QAM Systems", IEEE Transactions in Communications, Vol. COM-41, No 9, pp.1296-1299, Sep. 1993). This algorithm requires an acquisition time longer than 500 symbols. A shorter acquisition time can be achieved at the expense of a possibly higher sampling rate and additional circuitry for removing the modulation information. In particular, using a non-linearity, such as squaring followed by a narrow band-pass filter centered around the clock frequency and successively extracting the zero crossings suggests the principle of operation of another family of clock recovery techniques (for example U.S.Pat. No 4,312,075 issued to Kazuo M., Shigeyuki U., Yoshikazu 1., Fumio A. and Tatsuki H. in 1982). All of the four referenced methods involve a digital logic tuning the clock of the input sampling device. Furthermore, the error of the clock phase in the first three methods is estimated on the basis of the amplitude of the sampled values, while in the fourth one the actual timing error is implicitly used.

## SUMMARY OF THE INVENTION

According to the invention, a system for clock recovery responsive to a burst-like or continuous waveform is presented. The system is essentially characterised by a crossing detection device locating the zero crossings of the input waveform along with estimates of the associated waveform derivatives, a derivative based filter device for filtering out the zero crossings associated with smooth transitions of the input waveform, a device for extracting the timing phase error of the remaining steep zero crossings with respect to a free running reference clock and a clock extraction device for successively filtering these phase observations to obtain the phase of the desired recovered clock. The incoming waveform is then resampled in a full digital way, so that tuning the clock of the sampling device is prevented. The resampling process may be implemented by a simple down-sampler controlled by the recovered clock, or by an interpolator device. Two variations of the phase error filtering in the clock extraction device are suggested. The first one comprises a feed-forward running average circuit and is appropriate for transmission systems with short data bursts. The second one comprises a feed-back loop and a running average circuit and is appropriate for continuous transmission systems or burst transmission systems with long data bursts. Two extensions of the basic principle are included. The first one concerns a clock recovery circuit for complex input waveforms consisting of in-phase and quadrature components and the second one, a clock recovery circuit based on multiple threshold crossings.

Comprising a memory storage with dynamically varying depth for maintaining the observed phase values, the present invention handles in a unified and very efficient manner the problems of fast clock acquisition and reliable clock tracking. Consequently, the invention can be used in wireline and wireless communication systems employing point-to-multipoint and multipoint-to-multipoint topologies, where consecutive data bursts can possibly have independent clock phases. The invention can also be applied in systems for data transmission over fast fading and time varying channels even if modulation schemes with dense symbol constellation mappings such as the QAM are used and the communication channel exhibits a low SNR.

## BRIEF DESCRIPTION OF THE DRAWINGS

The features and advantages of the invention will be more apparent from the detailed description hereunder taken in conjunction with the accompanying drawings, wherein:

FIG.1 illustrates a first embodiment of a clock recovery circuit according to the invention;
FIG.2 is an example of schematic block diagram details of the pulse-to-location means means referred to in FIG. 1;
FIG.3 is an example of schematic block diagram details of the clock extraction means referred to in FIG. 1 employing a feed-forward structure;
FIG.4A through FIG.4N illustrate the waveforms useful to explain the operation of the circuit referred to in FIG.1, FIG.2 and FIG.3;
FIG.5 is an example of schematic block diagram details of the clock extraction means referred to in FIG. 1 employing a feed-back structure;
FIG.6 is an example of schematic block diagram details of the loop logic means referred to in FIG.5;
FIG.7 illustrates a second embodiment of a clock recovery circuit according to the invention;
FIG.8 is an example of schematic block diagram details of the clock extraction means referred to in FIG. 7 employing a feed-forward structure.

## DETAILED DESCRIPTION OF THE PREFERRED EMBODIMENTS

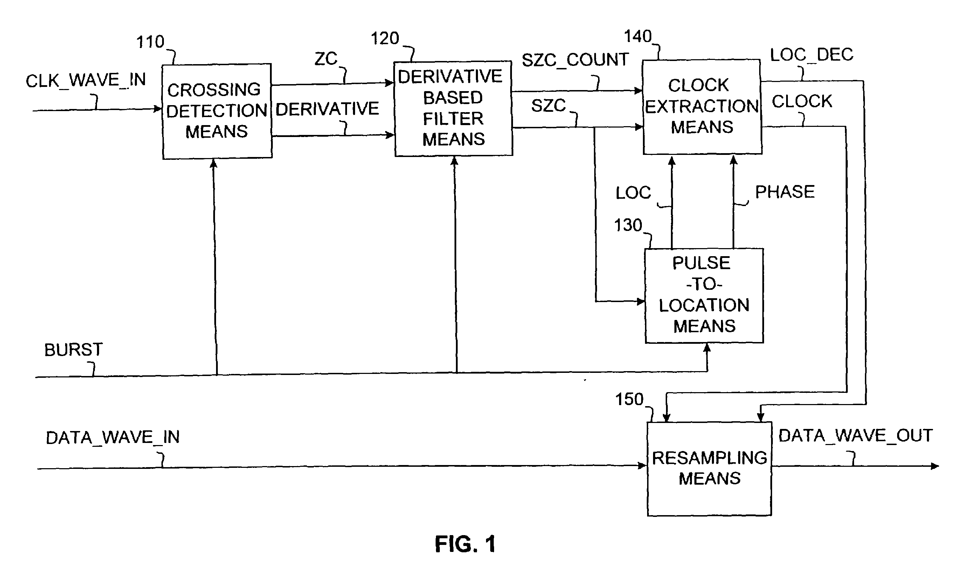

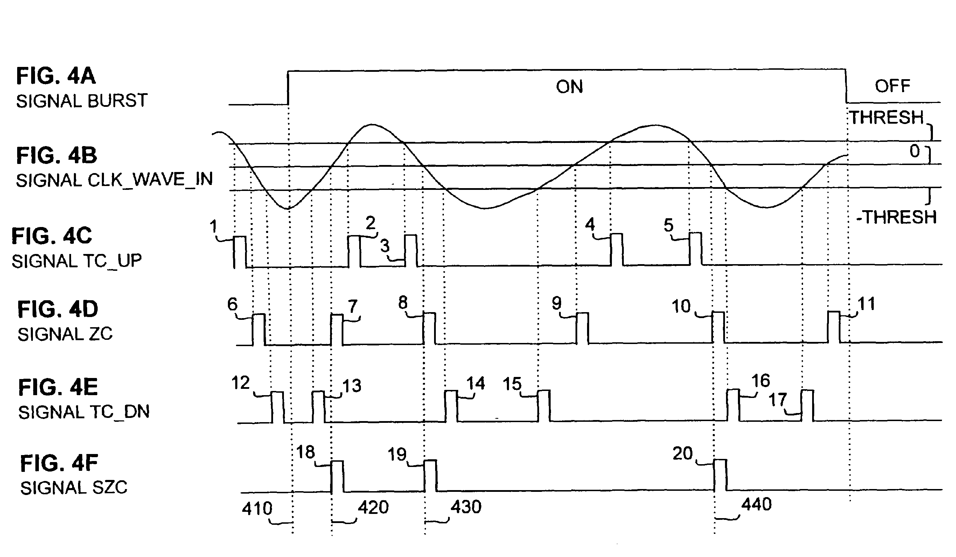

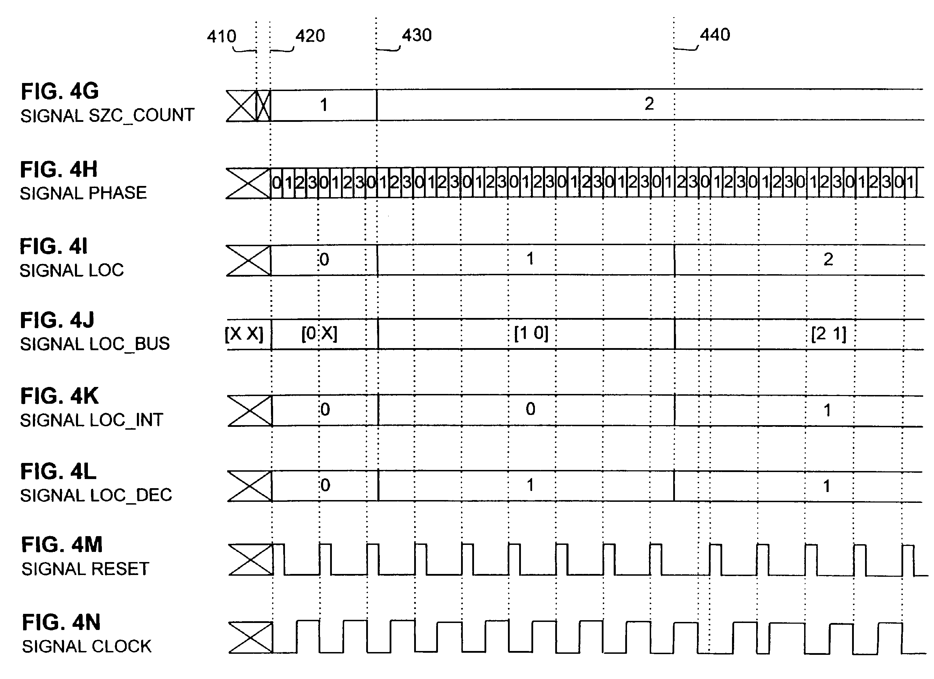

The embodiments described hereunder suggest realisations of the invention as examples without constituting any limitation whatsoever. Referring to FIG. 1, there is shown a specific embodiment of a clock recovery system in accordance with the invention. The system is responsive to a sampled burst-like or continuous waveform $DATA\_WAVE\_IN$ carrying a sequence of information symbols with period equal to a time interval $T_S$, a sampled baseband waveform $CLK\_WAVE\_IN$ and a gating control signal $BURST$, and it produces a resampled waveform DATA_WAVE_OUT synchronous to the information symbol sequence with said period $T_S$. The waveform $CLK\_WAVE\_IN$ may be identical to the waveform $DATA\_WAVE\_IN$ or it may be produced on the basis of $DATA\_WAVE\_IN$ by using for example squaring and bandpass filtering, so as the modulation information is suppressed. The signal $BURST$ is the result of a detection process and it serves the purpose of suspending the update of the clock phase if the input waveform does not carry valid data, as well as initialising the clock recovery process once the data transmission process is restored. An illustrative example of an "ON" pulse in the $BURST$ signal and a $CLK\_WAVE\_IN$ waveform are shown in FIG.4A and FIG.4B respectively. The waveforms $DATA\_WAVE\_IN$ and $CLK\_WAVE\_IN$ are sampled in response to a free running reference clock $FR\_CLK$ having a period T that is essentially equal to a number of $N$ times the said symbol period $T_S$. A crossing detection means 110 is coupled to receive as input the waveform $CLK\_WAVE\_IN$ and produces a binary waveform ZC and a signal $DERIVATIVE$, said waveform $ZC$ comprising pulses at the zero crossing locations of the said waveform $CLK\_WAVE\_IN$ said signal $DERIVATIVE$ comprising estimates of the derivative of the waveform $CLK\_WAVE\_IN$ at the zero crossing locations. In FIG.4D there is shown the example waveform $ZC$ produced on the basis of the $CLK\_WAVE\_IN$ waveform of FIG.4B. A derivative based filter means 120 coupled to receive as input the said binary waveform $ZC$, the said signal $DERIVATIVE$ and the said control signal $BURST$ produces a waveform $SZC$ dictating the steep zero crossings and a signal $SZC\_COUNT$. It carries out processing comprising successive steps of gating the waveform ZC in response to the control signal $BURST$ and discarding the zero crossing locations associated to the absolute derivative values that are smaller than a certain threshold. In FIG.4F there is shown an example waveform $SZC$ produced on the basis of the ZC and $BURST$ waveforms of FIG.4A and FIG.4D. Only three out of the six $ZC$ pulses have survived in signal $SZC$. Pulse 6 has been discarded since it does not occur during the "ON" pulse of the $BURST$ signal, while pulses 9 and 11 are discarded because they are generated by smooth zero crossings. Pulses 7, 8 and 10 of the $ZC$ signal give rise to the pulses 18, 19 and 20 respectively of the $SZC$ signal. The signal $SZC\_COUNT$ counts the "ON" pulses of the waveform $SZC$ that are generated after an "OFF"-to-"ON' transition of the signal $BURST$, while it maintains a maximum value equal to an integer number $M$ once this maximum value is attained. In FIG.

4G there is shown an example waveform *SZC_COUNT* produced on the basis of the *SZC* waveform in FIG.4F, where the said integer number *M* takes the value 2. A pulse-to-location means 130 processes the said binary waveform *SZC* and the said control signal *BURST* to produce two signals *PHASE* and *LOC.* The signal *PHASE* comprises a cyclic count with period equal to *N,* said count gets reset after the *"OFF"-to-"ON"* transition of the *BURST* signal, while the *LOC* signal carries the locations of the steep zero crossings in accordance to the *PHASE* signal. In FIG.4H and FIG.4I there are shown example signals *PHASE* and *LOC* respectively, where the said number *N* takes the value *4*. A clock extraction means 140 processes the said binary waveform *SZC* and the said signals *SZC_COUNT, LOC* and *PHASE* to produce two signals *CLOCK* and *LOC_DEC.* This processing comprises filtering of the locations of the steep zero crossings. This filtering process utilises a variable depth memory, where the memory depth is bounded at each time instance by the value of the signal *SZC_COUNT* at that instance. The resulting signal *CLOCK* is synchronised to the transmitted information symbols and it exhibits a time accuracy that is quantised by the period *T* of the said reference clock *FR_CLK.* The estimates of the timing synchronisation errors that are smaller than the said period *T* are carried by the values of the signal *LOC_DEC.* In FIG.4L and FIG.4N there are shown example signals *LOC_DEC* and *CLOCK* respectively. A resampling means 150 coupled to receive as input the said sampled waveform *DATA_WAVE_IN* and the said signals *CLOCK* and *LOC_DEC* produces the waveform *DATA_WAVE_OUT.* This waveform is essentially synchronous to the transmitted information symbol sequence.

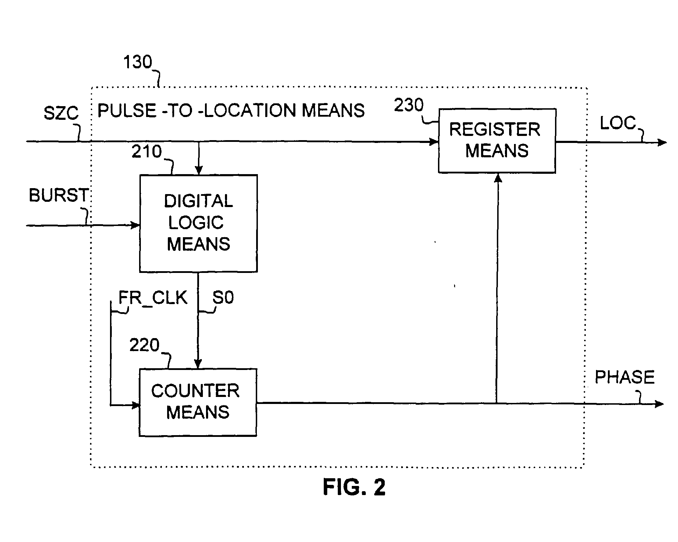

A preferred embodiment of the pulse-to-location means 130 is shown in FIG.2. The signal *PHASE* is produced by a cyclic counter means 220 in response to the said reference clock signal *FR_CLK* The cyclic counter 220 has a period equal to the said number *N* and is initialised to the value *N/2* by the *"ON"* pulses of a reset signal *S0.* The said signal *S0* is produced by a digital logic means 210 coupled to receive as input the signals *SZC* and *BURST.* An *"ON"* pulse of the signal SO is produced when the first *"ON"* pulse of the waveform *SZC* occurs after an *"OFF"-to-"ON"* transition of the signal *BURST.* The signal *LOC* is latched by a register means 230 coupled to receive as input data the values of the said signal *PHASE* and as trigger the *"ON"* pulses of the waveform *SZC.*

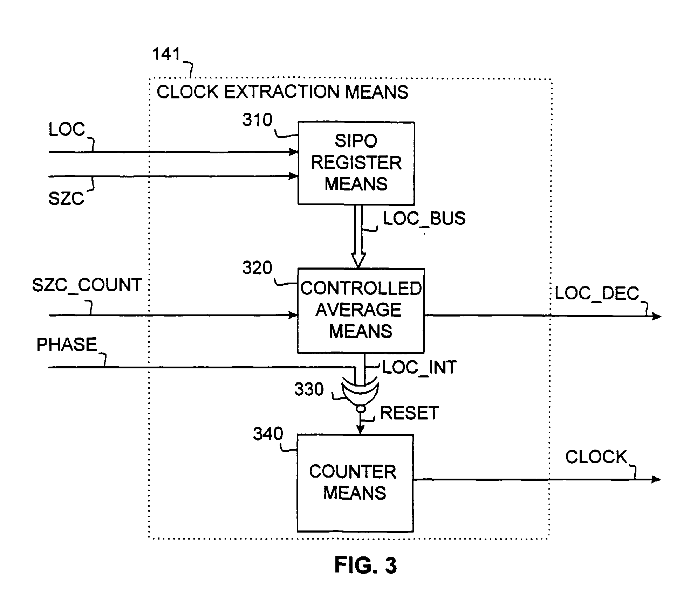

Referring to FIG.3. there is shown a specific embodiment 141 of the clock extraction means 140. A serial-in-parallel-out (SIPO) register means 310 coupled to receive as input the said signal *LOC* and the binary waveform *SZC* comprises a number of *M* entries, where each entry consists of a number of $log_2N$ bits. The register input is clocked by the *"ON"* pulses of the waveform *SZC* to shift in the signal *LOC.* The register output is clocked by the free running clock *FR_CLK* and at date *n* it comprises an *M*-component signal with values *LOC_BUS(m,n), m=0,1,...,M-1* equal to the SIPO register contents of rank *n.* In FIG.4J there is shown an example signal *LOC_BUS* produced on the basis of the *SZC* and *LOC* waveforms of FIG.4F and FIG.4I, where the number *M* takes the value 2. A controlled average means 320 coupled to receive as input the set of said *M*-component signal values *LOC_BUS(m,n), m=0,1,..., M-1* of rank *n* and the signal value *SZC_COUNT(n)* of rank *n* produces the signal values *LOC_INT(n)* and *LOC_DEC(n)* of rank *n* by performing the following successive steps: First, summing up the values of a number *L* of the said signal components *LOC_BUS(m,n), m=0,1,...L,* to obtain a sum carrying crossing phase information, where the number *L* is equal to the value of the signal *SZC_COUNT(n)* of rank *n*. Second, splitting the binary representation of the said sum in a most significant part comprising the $log_2N$ most significant bits and a least significant part comprising the remaining bits of the binary representation. Third, assigning to the said signal value *LOC_INT(n)* of rank *n* the value of the said most significant part, and assigning to the said signal value *LOC_DEC(n)* of rank *n* the value of the said least significant part. In FIG.4K and FIG.4L there are shown respectively the example signals *LOG_INT* and *LOC_DEC* produced on the basis of the *SZC_COUNT* and *LOC_BUS* waveforms of FIG.4G and FIG.4J. An equivalence-gate means 330 coupled to receive as input the signals *PHASE* and *LOG_INT* produces a binary waveform *RESET* by assigning to the value *RESET(n)* of rank *n* the *"ON"* value if the signal value *PHASE(n)* of rank *n* is equal to the signal value *LOC_INT(n)* of rank *n* and assigning to the value *RESET(n)* of rank *n* the *"OFF"* value otherwise. In FIG.4M there is shown an example signal *RESET* produced on the basis of the *PHASE* and *LOC_INT* waveforms of FIG.4H and FIG. 4K. A counter means 340 of size $log_2N$ bit responsive to the said reference clock *FR_CLK* gets reset by the *"ON"* pulses of the said *RESET* waveform and produces the said *CLOCK* signal by tying it to the most significant bit of the counter. In FIG.4N there is shown an example signal *CLOCK* produced on the basis of the *RESET* waveform in FIG.4M.

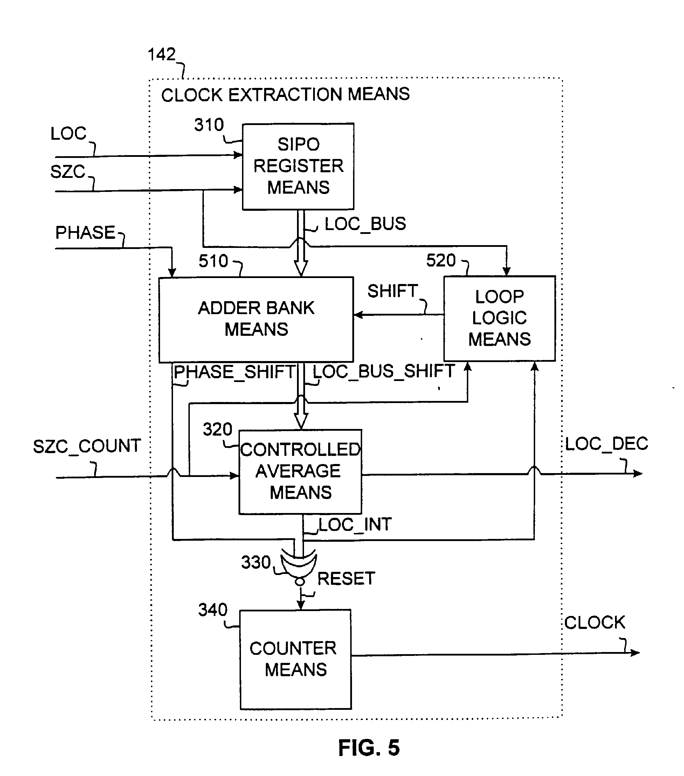

Referring to FIG.5. there is shown another specific embodiment 142 of the clock extraction means 140. A serial-in-parallel-out (SIPO) register means 310 coupled to receive as input the said signal *LOC* and the binary waveform *SZC* produces an *M*-component signal *LOC_BUS* as described with reference to FIG.3. An adder bank means 510 coupled to receive as input the said *M*-component signal *LOC_BUS,* the said signal *PHASE* and a signal *SHIFT* comprises *M+1* circular adders producing an *M*-component signal *LOC_BUS_ SHIFT* and a signal *PHASE_SHIFT.* The component of order *m* of the said *M*-component signal *LOC_BUS_ SHIFT* is produced by circular adding the signal *SHIFT* to the component of order *m* of the *M*-component signal *LOC_BUS* and the index *m* takes the values *0.1,...,M-*

*1.* The signal *PHASE_SHIFT* is produced by circular addition of the signals *PHASE* and *SHIFT.* The said circular addition receiving as inputs two integer numbers a and b and producing as output an integer number c is defined as follows

$$c = \begin{cases} a+b, & a+b < N \\ a+b-N, & a+b \geq N \end{cases}.$$

A controlled average means 320 coupled to receive as input the *M*-component signal *LOC_BUS_SHIFT* and the signal value *SZC_COUNT* produces the signals *LOC_INT* and *LOC_DEC* as described with reference to FIG.3. A loop logic means 520 coupled to receive as input the said binary waveform *SZC* and the said signals *SZC_COUNT* and *LOC_INT* produces the said signal *SHIFT.* An equivalence gate means 330 coupled to receive as input the signals *PHASE_SHIFT* and *LOC_INT* produces a binary waveform *RESET* and a counter means 340 responsive to the said reference clock *FR_CLK* gets reset by the said *RESET* waveform and produces the said *CLOCK* signal as described with reference to FIG.3.

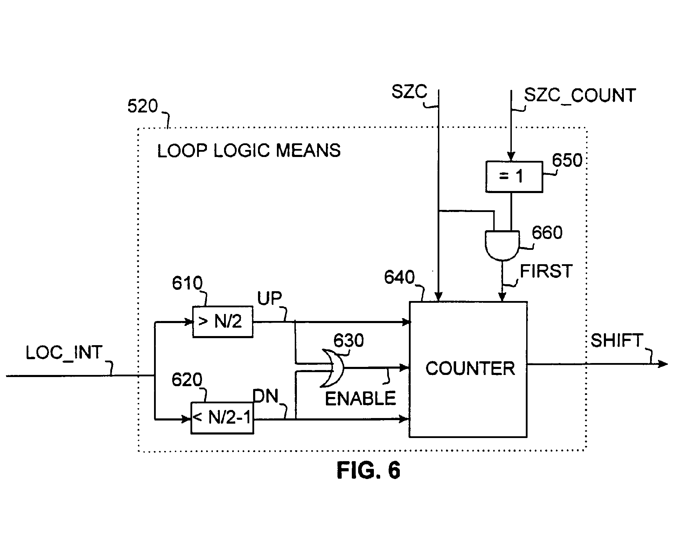

Referring to FIG.6. there is shown a specific embodiment of the loop logic means 520. A first comparator means 610 coupled to receive as input the said signal *LOC_INT* produces a binary waveform *UP* receiving an *"ON"* value if the input signal value is greater than a constant *N/2* and an *"OFF"* value otherwise. A second comparator means 620 coupled to receive as input the signal *LOC_INT* produces a binary waveform *DN* receiving an *"ON"* value if the input signal value is less than the constant *N/2-1* and an *"OFF"* value otherwise. An or-gate means 630 coupled to receive as input the binary waveforms *UP* and *DN* produces a binary waveform *ENABLE.* A third comparator means 650 coupled to receive as input the signal *SZC_COUNT* produces a binary waveform receiving an "*ON*" value if the input signal value is equal to 1 and an *"OFF"* value otherwise. An and-gate means 660 coupled to receive as input the third comparator output and the signal *SZC* produces a binary waveform *FIRST.* The said signal *SHIFT* is produced by assigning the contents of an up-down counter means 640 comprising $log_2 N$ bits and operating as follows. The counter is initialised to a value equal to *N/2* when an "*ON*" pulse occurs in the binary waveform *FIRST.* A change of the counter value occurs if the values of the waveforms *SZC* and *ENABLE* are simultaneously *"ON".* The said value change is an increment by one if the waveform "UP" has the value *"ON"* and a decrement by one if the waveform *"DN"* has the value "*ON*".

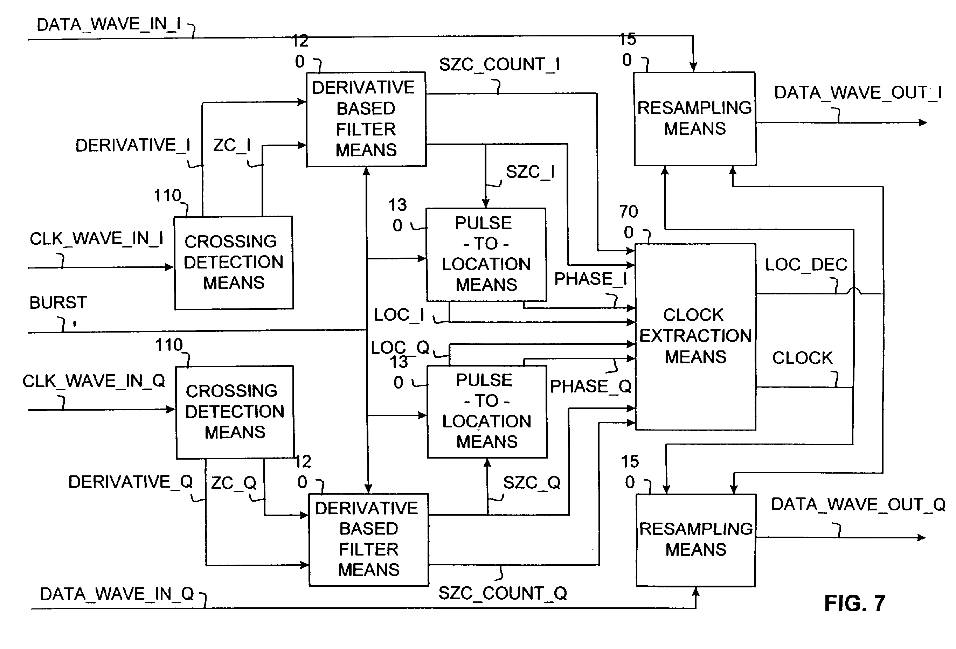

Referring to FIG.7, there is shown another specific embodiment of a clock recovery system in accordance with the invention. The system is responsive to a pair of sampled burst-like or continuous waveforms *DATA_WAVE_IN_I, DATA_WAVE_IN_Q* carrying a sequence of information symbols with period equal to a time interval $T_s$, a pair of sampled baseband waveforms *CLK_WAVE_IN_I, CLK_WAVE_IN_Q* and a gating control signal *BURST* and it produces a pair of resampled waveforms *DATA_WAVE_OUT_I, DATA_WAVE_OUT_Q* synchronous to the information symbol sequence with said period $T_S$. The waveforms *CLK_WAVE_IN_I, CLK_WAVE_IN_Q* may be identical to the waveforms *DATA_WAVE_IN_I, DATA_WAVE_IN_Q* or they may be produced on the basis of *DATA_WAVE_IN_I, DATA_WAVE_IN_Q* by using for example squaring of each component and bandpass filtering, so as the modulation information is suppressed. The signal *BURST is* the result of a detection process and it serves the purpose of suspending the update of the clock phase if the input waveform does not carry valid data, as well as initialising the clock recovery process once the data transmission process is restored. All input waveforms are sampled in response to a free running reference clock *FR_CLK* having a period *T* that is essentially equal to a number of *N* times the said symbol period $T_S$. A first crossing detection means 110 coupled to receive as input the said waveform *CLK_WAVE_IN_1* produces a binary waveform *ZC_I and* a signal *DERIVATIVE_I* as described with reference to FIG.1. A first derivative based filter means 120 coupled to receive as input the said waveform *ZC_I,* the said signal *DERIVATIVE_I* and the said control signal *BURST* produces a waveform *SZC_I* and a signal *SZC_COUNT_I* as described with reference to FIG.1. A first pulse-to-location means 130 coupled to receive as input the said binary waveform *SZC_I* and the said control signal *BURST* produces two signals *PHASE_I* and *LOC_I* as described with reference to FIG.1. A second crossing detection means 110 coupled to receive as input the said waveform *CLK_WAVE_IN_Q* produces a binary waveform *ZC_Q* and a signal *DERIVATIVE_Q* as described with reference to FIG.1. A second derivative based filter means 120 coupled to receive as input the said waveform *ZC_Q,* the said signal *DERIVATIVE_Q* and the said control signal *BURST* produces a waveform *SZC_Q* and a signal *SZC_COUNT_Q* as described with reference to FIG.1. A second pulse-to-location means 130 coupled to receive as input the said binary waveform *SZC_Q* and the said control signal *BURST* produces two signals *PHASE_Q* and *LOC_Q* as described with reference to FIG.1. A clock extraction means 700 coupled to receive as input the said binary waveforms *SZC_I, SZC_Q* and the said signals *SZC_COUNT_I, SZC_COUNT_Q, LOC_I, LOC_Q, PHASE_I* and *PHASE_Q* produces two signals *CLOCK* and *LOC_DEC.* The said clock extraction means 700 performs filtering of the locations of the steep zero crossings, said locations being carried by the signals *LOC_I* and *LOC_Q.* The said filtering comprises a variable depth memory that is bounded at each time instant by the sum of the values of the signals *SZC_COUNT_I* and *SZC_COUNT_Q* at that instant. The resulting signal *CLOCK* is synchronised to the transmitted information symbols and it exhibits a time accuracy that is quantised by the period $T$ of the said reference clock $FR\_CLK$. The said signal $LOC\_DEC$ carries the estimates of the timing synchronisation errors that are smaller than the said period $T$. A first resampling means 150 coupled to receive as input the said sampled waveform $DATA\_WAVE\_IN\_I$ and the said signals $CLOCK$ and $LOC\_DEC$ produces the waveform $DATA\_WAVE\_OUT\_I$ as described with reference to FIG.1. This waveform is essentially synchronous to the transmitted information symbols. A second resampling means 150 coupled to receive as input the said sampled waveform $DATA\_WAVE\_IN\_Q$ and the said signals $CLOCK$ and $LOC\_DEC$ produces the waveform $DATA\_WAVE\_OUT\_Q$ as described with reference to FIG.1. This waveform is essentially synchronous to the transmitted information symbols.

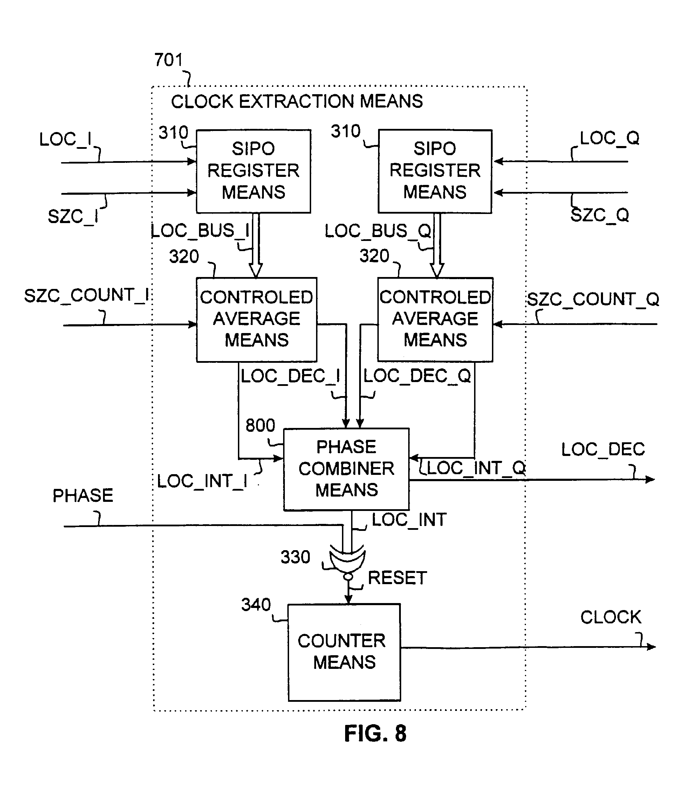

Referring to FIG.8, there is shown a specific embodiment 701 of the clock extraction means 700. A first serial-in-parallel-out register means 310 coupled to receive as input the said signal $LOG\_I$ and the binary waveform $SZC\_I$ produces an $M$-component signal $LOC\_BUS\_I$ as described with reference to FIG.3. A second serial-in-parallel-out register means 310 coupled to receive as input the said signal $LOC\_Q$ and the binary waveform $SZC\_Q$ produces an $M$-component signal $LOC\_BUS\_Q$ as described with reference to FIG. 3. A first controlled average means 320 coupled to receive as input the said M-component signal $LOG\_BUS\_I$ and the said signal value $SZC\_COUNT\_I$ produces the signals $LOC\_INT\_I$ and $LOG\_DEC\_I$ as described with reference to FIG.3. A second controlled average means 310 coupled to receive as input the said $M$-component signal $LOC\_BUS\_Q$ and the said signal value $SZC\_COUNT\_Q$ produces the signals $LOC\_INT\_Q$ and $LOC\_DEC\_Q$ as described with reference to FIG.3. A phase combiner means 800 coupled to receive as input the signals $LOC\_INT\_I, LOC\_DEC\_I$ $LOC\_INT\_Q$ and $LOC\_DEC\_Q$ produces the said signals $LOC\_INT$ and $LOC\_DEC$. The signal LOC_DEC is produced by the binary addition of signals $LOC\_DEC\_I$ and $LOC\_DEC\_Q$, where the binary addition also produces a carry bit signal $C$. The signal $LOC\_INT$ is produced by the circular addition of $LOC\_INT\_I$ with $LOC\_INT\_Q$ and the said carry bit signal $C$. An equivalence gate means 330 coupled to receive as input the signals $PHASE$ and $LOC\_INT$ produces a binary waveform $RESET$ as described with reference to FIG.3. A counter means 340 of size $log_2 N$ responsive to the said reference clock $FR\_CLK$ gets reset by the said $RESET$ waveform and produces the said $CLOCK$ signal as described with reference to FIG.3.

The example of schematic block diagram details 701 of the clock extraction means 700 described with reference to FIG.8 employs the principle of feedforward filtering of the timing phase samples as described with reference to FIG.3. This scheme comprises a phase combiner means 800 producing the signals $LOG\_INT$ and $LOC\_DEC$. Another scheme of the clock extraction means 700 can employ the principle of feedback filtering of the timing phase samples as described with reference to FIG.5. This implies the use of a phase combiner producing the signals $LOC\_INT, LOC\_DEC$ and $PHASE\_SHIFT$. In this case, the said signal $PHASE\_SHIFT$ is obtained by a cyclic addition of the signals $PHASE\_SHIFT\_I$ and $PHASE\_SHIFT\_Q,$ where the signals $PHASE\_SHIFT\_I$ and $PHASE\_SHIFT\_Q$ are produced on the basis of the signals $LOC\_I, SZC\_I$ and $LOC\_Q, SZC\_Q$ respectively as described with reference to FIG.5.

The embodiments of the clock recovery systems described with reference to FIG.1 and FIG.7 comprise a crossing detection means 110 producing a signal DERIVATIVE that approximates the derivative of the input waveform CLK_WAVE_IN at the zero crossing points. An efficient way for performing this approximation comprises the following successive steps. First, comparing the said waveform $DATA\_WAVE\_IN$ with a pair of thresholds of opposite values $THRESH$ and -$THRESH$ to produce the binary waveforms $TC\_UP$ and $TC\_DN$ dictating the respective threshold crossing locations. Second, approximating the derivative associated to a zero crossing embraced by a pair of consecutively produced threshold crossings of opposite threshold values with the inverse of the amount of time elapsed between the said threshold crossings. In FIG.4C and FIG.4E there are shown example waveforms $TC\_UP$ and $TC\_DN$ produced on the basis of the waveform $CLK\_WAVE\_IN$ in FIG.4B. If $t(k,l)$ signifies the time elapsed between pulses numbered $k$ and $l$, then, with reference to FIG.4C through FIG.4E, we approximate the derivative of zero crossing 6 with $l/d(1,12)$, the derivative of zero crossing 7 with $l/d(2,13)$, the derivative of zero crossing 8 with $l/d(3,14)$ and so on. Furthermore, this scheme can be generalised for approximating the derivative of the input waveform at the crossing points with an arbitrary threshold value $OFFSET$ by producing the said signals $TC\_UP$ and $TC\_DN$ in response to the thresholds $OFFSET+THRESH$ and $OFFSET-THRESH$ respectively.

Another preferred embodiment of a system performing clock recovery according to the invention processes a plurality of $K$ distinct sequences of crossing points of an input waveform $CLK\_WAVE\_IN$ with $K$ different threshold levels. This system comprises a plurality of $K$ crossing detection means 110, an equal number of derivative based filter means 120 and pulse-to-location means 130, as well as a clock extraction means and a resampling means 150. The said clock extraction means comprises a plurality of $K$ SIPO register means 310 and an equal number of controlled average means 320, as well as a phase combiner means, an equivalence-gate means 330 and a counter means 340. The said phase combiner means receives $K$ distinct pieces of crossing phase information associated with the $K$ different threshold levels and it produces a single set of phase information signals *LOC_INT* and *LOC_DEC.* Comprising *K*-input instead of 2-input adder means, this phase combiner operates in a way analogous to the one described with reference to FIG.8. Another preferred embodiment of a system according to the invention performing clock recovery on the basis of *K* distinct thresholds, employs the principle of feed-back filtering of the timing phase samples as described with reference to FIG.5, instead of the principle of feed-forward filtering of the timing phase samples as described with reference to FIG.3. This scheme comprises in addition a plurality of *K* adder bank means 510, an equal number of loop logic means 520, as well as a *K*-input adder means for producing a *PHASE_SHIFT* signal.

An example of the resampling means 150 referred to in FIG. 1 and FIG. 7 produces the said waveform *DATA_WAVE_OUT* by performing down-sampling of the said sampled waveform *DATA_WAVE_IN* in response to the clock signal *CLOCK.*

Another example of the resampling means 150 referred to in FIG. 1 and FIG. 7 produces the said waveform *DATA_WAVE_OUT* by performing interpolation to the said waveform *DATA_WAVE_IN.* This interpolation is carried out at consecutive dates dictated by the clock signal *CLOCK,* where an interpolation sample *DATA_WAVE_OUT(n)* of rank *n* is produced on the basis of a number of consecutive samples of the waveform *DATA_WAVE_IN* centred at date *n* and the timing error estimate *LOC_DEC(n)* at date *n.* A number of different interpolation techniques can be used described for example in the book R.E.Crochiere et al., 1983 (R.E.Crochiere and L.R.Rabiner, Multirate Digital Signal Processing, Prentice Hall, 1983) or the paper F.M.Gardner et al., 1993 (F.M.Gardner and R.A.Harris, "Interpolation in Digital Modems-Part II: Implementation and Performance, IEEE Transactions on Communications, Vol.41, No 6, June 1993).

Throughout the detailed descriptions of the embodiments of the clock recovery system according to the invention, zero latency times of the various processing elements have been assumed, for the purpose of clarity of the presentation. Nevertheless, a practical realization results a non-zero latency time that must be compensated by appropriate delay elements for synchronizing the input and output signals of these processing elements. In particular, if $I(n_1, n_2, ..., n_k)$ signifies the sum of the latency times of the processing elements numbered $n_1, n_2, ..., n_k$, the following delay elements must be used:

referring to FIG.1:

delaying signal *SZC* by *I*(130) at the input of means 140;
delaying signal *SZC_COUNT* by *I*(130) at the input of means 140;
delaying signal *BURST* by *I*(110) at the input of means 120;

delaying signal *BURST* by *I*(110,120) at the input of means 130;
delaying signal *DATA_WAVE_IN* by *I* (110,120,130,140) at the input of means 150;
referring to FIG.2:
delaying signal *SZC* by *I*(210,220) at the input of means 230;
delaying signal *PHASE* by *I*(230) at the output of means 130;

referring to FIG.3:

delaying signal *SZC_COUNT by I*(310) at the input of means 320;
delaying signal *PHASE* by *I*(310,320) at the input of means 330;
delaying signal *LOC_DEC* by *I*(330,340) at the output of means 141;

referring to FIG.5:

delaying signal *SZC_COUNT* by *I*(310,510) at the input of means 320;
delaying signal *PHASE* by *I*(310) at the input of means 510;
delaying signal *PHASE_SHIFT* by *I*(320) at the input of means 330;
delaying signal *LOC_DEC* by *I*(330,340) at the output of means 142;

referring to FIG.6:
delaying signal *SZC* by *I*(650) at the input of means 520;
referring to FIG.7:

delaying signal *SZC_I by I*(130) at the input of means 700;
delaying signal *SZC_Q* by *I*(130) at the input of means 700;
delaying signal *SZC_COUNT_I* by *I*(130) at the input of means 700;
delaying signal *SZC_COUNT_Q* by *I*(130) at the input of means 700;
delaying signal *BURST* by *I*(110) at the input of both means 120;
delaying signal *BURST* by *I*(110,120) at the input of both means 130;
delaying signal *DATA_WAVE_IN_I* by *I* (110,120,130,700) at the input of means 150;
delaying signal *DATA_WAVE_IN_Q* by *I* (110,120,130,700) at the input of means 150;

referring to FIG.8:

delaying signal *SZC_COUNT_I* by *I*(310) at the input of means 320;
delaying signal *SZC_COUNT_Q* by *I*(310) at the input of means 320;

delaying signal *PHASE* by *I*(310,320,800) at the input of means 330;
delaying signal *LOC_DEC* by *I*(330,340) at the output of means 701.

## Claims

1.  A system for performing a clock recovery process on a sampled burst-like or continuous waveform *CLK_WAVE_IN* and resampling a sampled baseband burst-like or continuous waveform *DATA_WAVE_IN* to produce a waveform *DATA_WAVE_OUT* in response to the recovered clock, said waveform *DATA_WAVE_IN* carrying information symbols said symbols produced at successive dates separated by a time interval $T_S$, said clock recovery process being gated by a control signal *BURST,* said signal *BURST* being the result of an input power detection process, said waveform *CLK_WAVE_IN* carrying the clock information of said waveform *DATA_WAVE_IN,* said waveforms *DATA_WAVE_IN* and *CLK_WAVE_IN* being sampled in response to a free running reference clock *FR_CLK,* said clock *FR_CLK* having a period equal to a time interval *T*, said time interval *T* being essentially equal to a number of *N* times the said symbol period $T_S$, wherein the system is characterised by:

    a crossing detection means for producing a binary waveform *ZC* and a signal *DERIVATIVE,* said waveform *ZC* comprising pulses at the zero crossing locations of the said waveform *CLK_WAVE_IN* said signal *DERIVATIVE* comprising estimates of the derivative of the waveform *CLK_WAVE_IN* at the zero crossing locations;
    a means for processing the said waveform *ZC,* the said signal *DERIVATIVE* and the said control signal *BURST* to produce a waveform *SZC* dictating the steep zero crossings and a signal *SZC_COUNT* said processing comprising successive steps of gating the waveform *ZC* in response to the control signal *BURST and* discarding the zero crossing locations associated to the absolute derivative values that are smaller than a certain threshold, said derivative values being specified by the signal *DERIVATIVE,* said signal *SZC_COUNT* counting the *"ON"* pulses of the waveform *SZC* that are generated after an *"OFF"*-to-*"ON"* transition of the signal *BURST,* said signal *SZC_COUNT* maintaining a maximum value equal to an integer number M once this maximum value is attained;
    a means for processing the said binary waveform *SZC* and the said control signal *BURST* to produce two signals *PHASE* and *LOC,* said signal *PHASE* being produced by a cyclic counting in response to the said reference clock signal *FR_CLK,* said cyclic counting having a period equal to the said number *N* and being initialised to the value *N/2* when the first *"ON"* pulse of the waveform *SZC* occurs after an *"OFF"*-to-*"ON"* transition of the signal *BURST,* said signal *LOC* latching the value of the said signal *PHASE* in response to the *"ON"* pulses of the waveform *SZC;*
    a clock extraction means for processing the said binary waveform *SZC* and the said signals *SZC_COUNT, LOC* and *PHASE* to produce two signals *CLOCK* and *LOC_DEC,* said processing comprising filtering of the locations of the steep zero crossings, said locations being carried by the signal *LOC,* said filtering utilising a variable depth memory, said memory depth being bounded at each date by the value of the signal *SZC_COUNT* at that date, said signal *CLOCK* being synchronised to the transmitted information symbols and exhibiting a time accuracy that is quantised by the period *T* of the said reference clock *FR_CLK,* said signal *LOC_DEC* carrying the estimates of the timing synchronisation errors that are smaller than the said period *T*;
    a resampling means coupled to receive as input the said sampled waveform *DATA_WA VE_IN* and the said signals *CLOCK* and *LOC_DEC* produces the waveform *DATA_WAVE_OUT,* said waveform DATA_WAVE_OUT being essentially synchronous to the transmitted information symbols.

2.  A system according to claim 1, in which the clock extraction means operates at successive dates *n* separated by a time interval equal to *T*, wherein the said clock extraction means is characterised by:

    a serial-in-parallel-out register means coupled to receive as input the said signal *LOC* and the binary waveform *SZC* comprises a number of *M* entries, where each entry consists of a number of $log_2 N$ bits, said register input is clocked by the *"ON"* pulses of the waveform *SZC* to shift in the signal *LOC* and the register output at date *n* comprises an *M*-component signal with values *LOC_BUS(m,n), m=0,1,...,M-1* equal to the contents of the said register of rank *n*;
    a controlled average means coupled to receive as input the set of said *M*-component signal values *LOC_BUS(m,n), m=0,1,...,M-1* of rank *n* and the signal value *SZC_COUNT(n)* of rank *n* produces the signal values *LOC_INT(n)* and *LOC_DEC(n)* of rank *n* by performing the successive steps of summing up the values of a number *L* of the said signal components *LOC_BUS(m,n), m=0,1,...,L,* to obtain a sum carrying crossing phase information, where the number *L* is equal to the value of the signal *SZC_COUNT(n)* of rank *n,* splitting the binary representation of the said sum in a most significant part comprising the $log_2N$ most significant bits and a least significant part comprising the remaining bits of the binary representation, assigning to the said signal value *LOC_INT(n)* of rank *n* the value of the said most significant part, and assigning to the said signal value *LOC_DEC(n)* of rank *n* the value of the said least significant part;

an equivalence gate means coupled to receive as input the signals *PHASE_SHIFT* and *LOC_INT* produces a binary waveform *RESET* by assigning to the value *RESET(n)* of rank *n* the *"ON"* value if the signal value *PHASE(n)* of rank *n* is equal to the signal value *LOC_INT(n)* of rank *n* and assigning to the value *RESET(n)* of rank *n* the *"OFF"* value otherwise;

a counter means of size $log_2N$ responsive to the said reference clock *FR_CLK* gets reset by the *"ON"* pulses of the said *RESET* waveform and produces the said *CLOCK* signal by tying it to the counter bit of order $log_2N\text{-}1.$

3. A system according to claim 1, in which the clock extraction means operates at successive dates *n* separated by a time interval equal to *T*, wherein the said clock extraction means is characterised by:

a serial-in-parallel-out register means coupled to receive as input the said signal *LOC* and the binary waveform *SZC* comprises a number of *M* entries, where each entry consists of a number of $log_2N$ bits, said register input is clocked by the *"ON"* pulses of the waveform *SZC* to shift in the signal *LOC* and the register output at date *n* comprises an *M*-component signal with values *LOC_BUS(m,n), m=0,1,..., M-1* equal to the contents of the said register of rank *n*;

an adder bank means coupled to receive as input the said *M*-component signal *LOC_BUS,* the said signal *PHASE* and a signal *SHIFT* comprises *M+1* circular adders producing an *M*-component signal *LOC_BUS_SHIFT* and a signal *PHASE_SHIFT,* where the component of order *m* of the said *M*-component signal *LOC_BUS_SHIFT* is produced by circular adding the signal *SHIFT* to the component of order *m* of the *M*-component signal *LOC_BUS* in which the index *m* takes the values *0,1,...,M-1,* said signal *PHASE_SHIFT* is produced by circular addition of the signals *PHASE* and *SHIFT,* said circular addition receiving as inputs two integer numbers *a* and *b* and producing as output an integer number c being defined as follows

$$c = \begin{cases} a+b, & a+b < N \\ a+b-N, & a+b \geq N \end{cases};$$

a controlled average means coupled to receive as input the set of values *LOC_BUS_SHIFT(m, n), m=0,1,...,M-1* of rank *n* of the said *M*-component signal *LOC_BUS_SHIFT* and the signal value *SZC_COUNT(n)* of rank *n* produces the signal values *LOC_INT(n)* and *LOC_DEC(n)* of rank *n* by performing the successive steps of summing up the values of a number *L* of the said signal components *LOC_BUS_SHIFT(m, n), m=0,1,...,L,* to obtain a sum carrying crossing phase information, where the number *L* is equal to the value of the signal *SZC_COUNT (n)* of rank *n*, splitting the binary representation of the said sum in a most significant part comprising the $log_2N$ most significant bits and a least significant part comprising the remaining bits of the binary representation, assigning to the said signal value *LOC_INT(n)* of rank *n* the value of the said most significant part, and assigning to the said signal value *LOC_DEC(n)* of rank *n* the value of the said least significant part;

a loop logic means coupled to receive as input the said binary waveform *SZC* and the said signals *SZC_COUNT* and *LOC_INT produces* the said signal *SHIFT;*

an equivalence gate means coupled to receive as input the signals *PHASE_SHIFT* and *LOC_INT* produces a binary waveform *RESET by* assigning to the value *RESET(n)* of rank n the *"ON"* value if the signal value *PHASE(n)* of rank *n* is equal to the signal value *LOC_INT(n)* of rank *n* and assigning to the value *RESET(n)* of rank *n* the *"OFF'* value otherwise;

a counter means of size $log_2N$ responsive to the said reference clock *FR_CLK* gets reset by the *"ON"* pulses of the said *RESET* waveform and produces the said *CLOCK* signal by tying it to the most significant bit of the counter.

4. A system according to claim 1 and claim 3, in which the loop logic means comprises a counter of $log_2N$ bits, said counter producing the said signal *SHIFT,* said counter being initialised to a value equal to *N/ 2* when an *"ON"* pulse occurs in the *SZC* binary waveform and simultaneously the value of the signal *SZC_COUNT* is equal to *I*, where a change of the counter value occurs if the value of the waveform *SZC* is *"ON",* said value change can be an increment by one or a decrement by one, said increment is forced if the value of the signal *LOC_INT* is larger than *N/2,* decrement is forced if the value of the signal *LOC_INT* is smaller than *N/2-1.*

5. A system for performing a clock recovery process on a pair of sampled burst-like or continuous waveforms *CLK_WAVE_IN_I*, *CLK_WAVE_IN_Q* and resampling a pair of sampled baseband burst-like or continuous waveforms *DATA_WAVE_IN_I, DATA_WAVE_IN_Q* to produce a pair of waveforms *DATA_WAVE_OUT_I, DATA_WAVE_OUT_Q* in response to the recovered clock, said waveforms *DATA_WAVE_IN_I*, *DATA_WAVE_IN_Q* carrying in-phase and quadrature information symbols, said symbols being produced at successive dates separated by a time interval $T_s$, said clock recovery process being gated by a control signal *BURST,* said signal *BURST* being the result of a detection process, said pair of waveforms *CLK_WAVE_IN_I*, *CLK_WAVE_IN_Q,* carrying the clock information of the said waveforms *DATA_WAVE_IN_I, DATA_WAVE_IN_Q,* said waveforms *DATA_WAVE_IN_I, DATA_WAVE_IN_Q* and *CLK_WAVE_IN_I, CLK_WAVE_IN_Q* being sampled in response to a free running reference clock *FR_CLK,* said clock *FR_CLK* a period equal to a time interval *T*, said time interval *T* being essentially equal to a number of *N* times the said symbol period $T_s$, wherein the system is characterised by:

a first crossing detection means processing the said waveform *CLK_WAVE_IN_I* to produce a binary waveform *ZC_I* and a signal *DERIVATIVE_I* according to claim 1; a first means for processing the said waveform *ZC_I,* the said signal *DERIVATIVE_I* and the said control signal *BURST* to produce a waveform *SZC_I* and a signal *SZC_COUNT_I* according to claim 1; a first means for processing the said binary waveform *SZC_I* and the said control signal *BURST* to produce two signals *PHASE_I* and *LOC_I* according to claim 1; a second crossing detection means processing the said waveform *CLK_WAVE_IN_Q* to produce a binary waveform *ZC_Q* and a signal *DERIVATIVE_Q* according to claim 1; a second means for processing the said waveform *ZC_Q,* the said signal *DERIVATIVE_Q* and the said control signal *BURST* to produce a waveform *SZC_Q* and a signal *SZC_COUNT_Q* according to claim 1; a second means for processing the said binary waveform *SZC_Q* and the said control signal *BURST* to produce two signals *PHASE_Q* and *LOC_Q* according to claim 1; a clock extraction means for processing the said binary waveforms *SZC_I, SZC_Q* and the said signals *SZC_COUNT_I, SZC_COUNT_Q, LOC_I, LOC_Q, PHASE_I* and *PHASE_Q* to produce two signals *CLOCK* and *LOC_DEC,* said processing comprising filtering of the locations of the steep zero crossings, said locations being carried by the signals *LOC_I* and *LOC_Q,* said filtering utilising a variable depth memory, said memory depth being bounded at each date by the sum of the values of the signals *SZC_COUNT_I* and *SZC_COUNT_Q* at that date, said signal *CLOCK* being synchronised to the transmitted information symbols and exhibiting a time accuracy that is quantised by the period *T* of the said reference clock *FR_CLK,* said signal *LOC_DEC* carrying the estimates of the timing synchronisation errors that are smaller than the said period *T*; a first resampling means coupled to receive as input the said sampled waveform *DATA_WAVE_IN_I* and the said signals *CLOCK* and *LOC_DEC* produces the waveform *DATA_WAVE_OUT_I*, said waveform *DATA_WAVE_OUT_I* being essentially synchronous to the transmitted information symbols; a second resampling means coupled to receive as input the said sampled waveform *DATA_WAVE_IN_Q* and the said signals *CLOCK* and *LOC_DEC* produces the waveform *DATA_WAVE_OUT_Q*, said waveform *DATA_WAVE_OUT_Q* being essentially synchronous to the transmitted information symbols.

6. A system according to claim 5, wherein the said clock extraction means is characterised by:

a first serial-in-parallel-out register means coupled to receive as input the said signal *LOC_I* and the binary waveform *SZC_I* produces an *M*-component signal *LOC_BUS_I* according to claim 2; a second serial-in-parallel-out register means coupled to receive as input the said signal *LOG_Q* and the binary waveform *SZC_Q* produces an *M*-component signal *LOC_BUS_Q* according to claim 2; a first controlled average means coupled to receive as input the said *M*-component signal *LOC_BUS_I* and the said signal value *SZC_COUNT_I* produces the signals *LOC_INT_I* and *LOC_DEC_I* according to claim 2; a second controlled average means coupled to receive as input the said *M*-component signal *LOC_BUS_Q* and the said signal value *SZC_COUNT_Q* produces the signals *LOC_INT_Q* and *LOC_DEC_Q* according to claim 2;

a phase combiner means coupled to receive as input the signals *LOC_INT_I, LOC_DEC_I, LOC_INT_Q* and *LOC_DEC_Q* produces the said signals *LOC_INT* and *LOC_DEC,* said signal LOC_DEC being produced by the binary addition of signals *LOC_DEC_I* and *LOC_DEC_Q,* said binary addition also produces a carry bit signal *C,* said signal *LOC_INT* being produced by the circular addition of *LOC_INT_I, LOC_INT_Q* and the said carry bit signal *C*;

an equivalence gate means coupled to receive as input the signals *PHASE* and *LOC_INT* produces a binary waveform *RESET* according to claim 2;

a counter means of size $log_2N$ responsive to the said reference clock *FR_CLK* gets reset by the *"ON"* pulses of the said *RESET* waveform and produces the said *CLOCK* signal by tying it to the counter bit of order $log_2N\text{-}1$.

7. A system according to claim 5, wherein the said clock extraction means comprises means for serial-in-parallel-out register, adder bank, controlled average loop logic, equivalence gate and counter according to claim 3, as well as a phase combiner means according to claim 6, where the signal *PHASE_I* is processed by an adder bank means to produce a *PHASE_SHIFT_I* signal, the signal *PHASE_Q* is processed by an adder bank means to produce a *PHASE_SHfFT_Q* signal, a first loop logic means receives as input the signal *SZC_COUNT_I* and a signal *PHASE_SHIFT* and a second loop logic means receives as input the signal *SZC_COUNT_Q* and the signal *PHASE_SHIFT,* said signal *PHASE_SHIFT* being produced by the cyclic addition of *PHASE_SHIFT_I* and *PARSE_SHIFT_Q.*

8. A system according to claim 1 or claim 5, wherein producing the signal *DERIVATIVE* in the crossing detection means comprises successive steps of comparing the said waveform *DATA_WAVE_IN* with a pair of thresholds of opposite values *THRESH* and *-THRESH* and approximating the derivative associated to a zero crossing embraced by a pair of consecutively produced threshold crossings of opposite threshold values with the inverse of the amount of time elapsed between the said threshold crossings.

9. A system for performing a clock recovery process on a sampled burst-like waveform *CLK WAVE_IN* and resampling a sampled baseband burst-like or continuous waveform *DATA_WAVE_IN* to produce a waveform *DATA_WAVE_OUT* in response to the recovered clock, said waveform *DATA_WAVE_IN* carrying information symbols said symbols being produced at successive dates separated by a time interval $T_s,$ said clock recovery process being gated by a control signal *BURST,* said signal *BURST* being the result of an input power detection process, said waveform *CLK_WAVE_IN* carrying the clock information of said waveform *DATA_WAVE_IN,* said waveforms *DATA_WAVE_IN* and *CLK_WAVE_IN* being sampled in response to a free running reference clock *FR_CLK,* wherein the system is characterised by:

a plurality of *K* crossing detection means produces location and derivative information on crossing points of the waveform *CLK_WAVE_IN* with *K* different threshold levels;

means for processing the said location and derivative information produces *K* distinct pieces of crossing phase information associated to the *K* different threshold levels;

a phase combiner means combines the said *K* distinct pieces of crossing phase information to produce a single crossing phase information comprising *K*-input adder means;

a processing means for transforming the phase information into a clock with the said phase and accordingly resampling the waveform *DATA_WAVE_IN* to produce the waveform *DATA_WAVE_OUT.*

10. A system according to claim I or claim 5 or claim 9, wherein the resampling means produces the said waveform *DATA_WAVE_OUT* by performing downsampling of the said sampled waveform *DATA_WAVE_IN* in response to the clock signal *CLOCK.*

11. A system according to claim 1 or claim 5 or claim 9, wherein the resampling means produces the said waveform *DATA_WAVE_OUT* by performing interpolation to the said waveform *DATA_WAVE_IN,* said interpolation being carried out at consecutive dates dictated by the clock signal *CLOCK,* where an interpolation sample *DATA_WAVE_OUT(n)* of rank *n* is produced on the basis of a number of consecutive samples of the waveform *DATA_WAVE_IN* centred at date *n* and the timing error estimate *LOC_DEC(n)* at date *n.*

**FIG. 1**

**FIG. 2**

141

CLOCK EXTRACTION MEANS

LOC

SZC

310

SIPO
REGISTER
MEANS

LOC_BUS

SZC_COUNT

320

CONTROLLED
AVERAGE
MEANS

LOC_DEC

PHASE

LOC_INT

330

RESET

340

COUNTER
MEANS

CLOCK

**FIG. 3**

**FIG. 4A**
SIGNAL BURST

ON     OFF

**FIG. 4B**
SIGNAL CLK_WAVE_IN

THRESH

0

-THRESH

**FIG. 4C**
SIGNAL TC_UP

1    2   3    4   5

**FIG. 4D**
SIGNAL ZC

6    7   8    9   10   11

**FIG. 4E**
SIGNAL TC_DN

12   13   14   15   16   17

**FIG. 4F**
SIGNAL SZC

18   19   20

410    420   430    440

EP 1 071 241 A1

**FIG. 4G**
SIGNAL SZC_COUNT

**FIG. 4H**
SIGNAL PHASE

**FIG. 4I**
SIGNAL LOC

**FIG. 4J**
SIGNAL LOC_BUS

**FIG. 4K**
SIGNAL LOC_INT

**FIG. 4L**
SIGNAL LOC_DEC

**FIG. 4M**
SIGNAL RESET

**FIG. 4N**
SIGNAL CLOCK

EP 1 071 241 A1

**FIG. 5**

**FIG. 6**

FIG. 7

EP 1 071 241 A1

**FIG. 8**

**European Patent Office**

## EUROPEAN SEARCH REPORT

Application Number

EP 99 60 0020

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 296 253 A (FUJITSU LTD) 28 December 1988 (1988-12-28) * page 1, line 8 - page 6, line 16 * * page 7, line 19 - page 9, line 21 * | 1,5,9 | H04L7/033 |
| A | WALKER R L ET AL: "A HYBRID SIMULATION OF A DIGITAL RADIO, A SIMSTAR APPROACH" PROCEEDINGS OF THE 1986 SUMMER COMPUTER SIMULATION CONFERENCE, 28 - 30 July 1986, pages 219-222, XP000892787 RENO, NV, USA * abstract * * page 222, column 1, line 23 - column 2, line 16 * | 1,5,9 | |
| A | SONG J C ET AL: "THE PERFORMANCE OF SYMBOL TIMING ALGORITHM FOR MULTI-LEVEL MODULATION SCHEME" IEEE VEHICULAR TECHNOLOGY CONFERENCE,US,NEW YORK, IEEE, vol. CONF. 46, 1996, pages 1883-1887, XP000595829 ISBN: 0-7803-3158-3 * the whole document * | 1,5,9 | TECHNICAL FIELDS SEARCHED (Int.Cl.7) H04L |
| D,A | GARDNER F M: "A BPSK/QPSK TIMING-ERROR DETECTOR FOR SAMPLED RECEIVERS" IEEE TRANSACTIONS ON COMMUNICATIONS,US,IEEE INC. NEW YORK, vol. 34, no. 5, 1 May 1986 (1986-05-01), pages 423-429, XP000608506 ISSN: 0090-6778 * the whole document * | 1,5,9 | |

The present search report has been drawn up for all claims

| Place of search | Date of completion of the search | Examiner |
|---|---|---|
| THE HAGUE | 3 May 2000 | Chauvet, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 60 0020

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2000

| Patent document cited in search report | Publication date | Patent family member(s) | | Publication date |
|---|---|---|---|---|
| EP 0296253 A | 28-12-1988 | JP | 6093677 B | 16-11-1994 |
| | | WO | 8805235 A | 14-07-1988 |
| | | US | 4912726 A | 27-03-1990 |

EPO FORM P0459

For more details about this annex : see Official Journal of the European Patent Office, No. 12/82